# EUROPEAN PATENT APPLICATION

(11) **EP 0 735 508 A1**
(43) Date of publication of application: **02.10.1996**
(21) Application number: 96302126.6
(22) Date of filing: 27.03.1996
(51) Int. Cl.: G06T 1/20

(54) **Data processing apparatus**

(30) Priority: 29.03.1995 GB 9506414
(71) Applicant: SONY UNITED KINGDOM LIMITED, Weybridge KT13 0XW (GB)
(72) Inventor: Wilkinson, James Hedley, Heathlands, Tadley, Hampshire, RG26 6UN (GB); Eastty, Peter, Oxford, OX4 1TE (GB)
(74) Representative: Ayers, Martyn Lewis Stanley

(57) **Abstract**

An apparatus for producing an output stream of data, preferably video and/or audio data, in real time having an output section operable at the data rate of the output data stream and an input section for receiving a real time input data stream, also preferably video and/or audio data, a parallel processing section comprising a plurality of concurrently operable processing means for processing in parallel respective selected sub-sets of data so as to make processed data available in time for combining to form said output data stream, and means for interfacing the output section and input section with the parallel processing section, the means comprising a plurality of data buffers, each data buffer being for buffing data between the input/output section and a respective one of the processing means and being operable to output data to the data stream at the data rate of the stream.

## Description

The present invention relates to an apparatus for processing data and, more particularly, high rate data such as video signal data.

It is known to use software controlled computers to process data such as video data and significant progress has been made in the development of non-real time operations, such as graphics work and image manipulation. It is also known to use, in non-real time applications, a hard disc/video buffer/computer as an engineering tool to aid the development of software algorithms. Such systems typically involve around 5 minutes of processing time for 1 second of video information, a dilation factor of 300 to 1. Although the time required for processing is clearly undesirable, the flexibility of operation is undeniable, allowing changes in the process through software programming.

There is a need for a computer architecture which may operate in real time. However, since most normal video processes have operations in the region of Giga operations per second with a video input/output level at a continuous 27 megabits per second, there is little likelihood of known processor architectures meeting these real time operation requirements.

Thus, it is an object of the present invention to provide an apparatus for processing data, such as video data, having very high data rates.

According to the present invention there is provided an apparatus for producing an output stream of data in real time comprising:
an output section operable at the data rate of the output data stream;
a parallel processing section comprising a plurality of concurrently operable processing means for processing in parallel respective selected subsets of data so as to make processed data available in time for combining to form said output data stream; and
means for interfacing the output section with the parallel processing section, the means comprising a plurality of data buffers, each data buffer being for buffering data between the output section and a respective one of the processing means and being operable to output data to the data stream at the data rate of said stream; wherein:
the output section is arranged to combine the outputs of the buffers to form said real time output data stream.

Preferably, the apparatus has an input section for receiving a real time input data stream and means for interfacing the input section with the parallel processing section, the means comprising a plurality of data buffers, each respective data buffer being for buffering data between the input and a respective one of the processing means and wherein the processing means are operative to allocate processing of portions of data of the input data stream to respective ones of the processing means so that processing thereof can take place in parallel whereby the throughput of processed data can keep up with the input data stream.

Preferably, the apparatus is used for producing an output stream of video and/or audio data of an industry standard format and rate i.e. a standard adopted by industry from time to time such as CCIR-601 (ITU-R601), PAL, SECAM, NTSC, HDTV, RDAT, etc.

Thus, in a video application, there may be provided a video part which can be well understood by video engineers and a computer part which can be well understood by software engineers. Programmers should easily be able to grasp the concepts to make the best programming possible. The buffer between these two areas of video and computer is the video buffer and this has the ability to store for instance a frame of data, with synchronous video on one port and asynchronous data on the other port. This allows the computer to operate asynchronously at its best speed whilst the use of a synchronous video bus allows real time monitoring for video debugging.

The present invention will be more clearly understood from the following description, given by way of example only, with reference to the accompanying drawings, in which:
Figure 1 illustrates an embodiment of the present invention;
Figure 2 illustrates a four-wire transputer bus system which may be used with the present invention; and
Figure 3 illustrates an alternative processing unit according to the present invention.

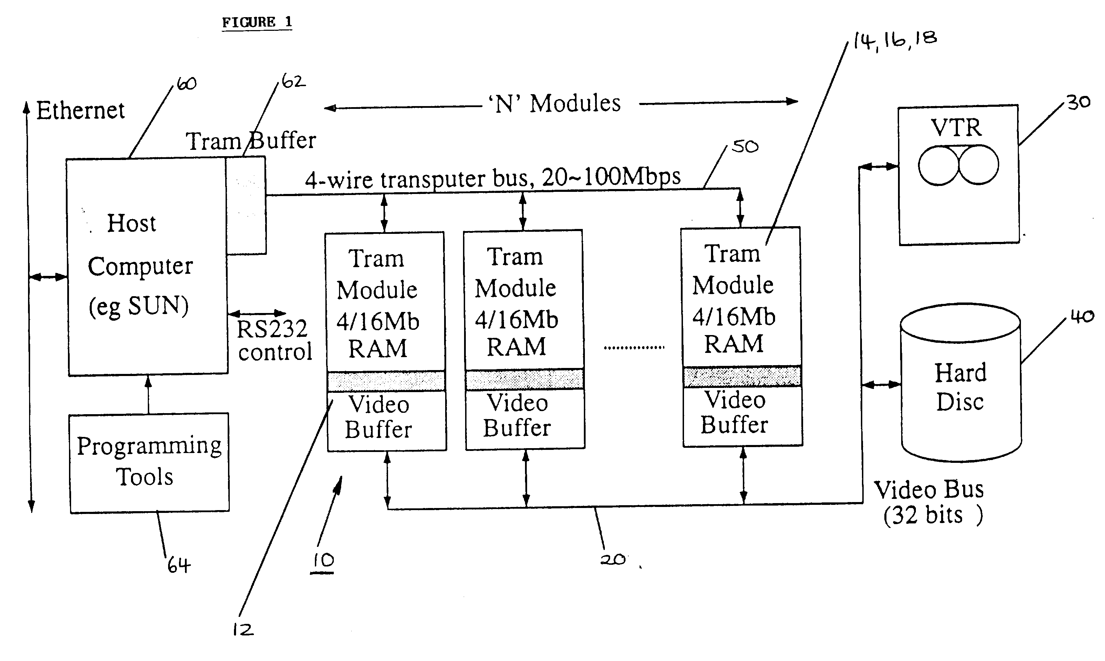

As illustrated in Figure 1 a series of processing units 10 are provided in parallel, each connected at its input to a video bus 20. The video bus 20 allows each of the processing units 10 to access part of a video signal supplied by a video tape recorder 30 or a hard disc unit 40.

Each processing unit 10 has a video buffer 12 into which video data is written at the video rate. In this way, each of the processing units may receive those parts of the video signal which it requires.

Each of the processing units also comprises a processor 14, a memory 16, such as a RAM, and a control data processor 18. The processor 14 performs the required video processing on the video data, while the control data processor 18 forms an interface with a control bus 50 and handles the control data so as to avoid slowing down operation of the processor 14. The processor 14 and RAM 16 process data at a data rate which is lower than that of the video data rate. More particularly, the processor 14 may operate at a standard computer rate and may be asynchronous or synchronous with the processor 14 of one or more of the other processing units 10.

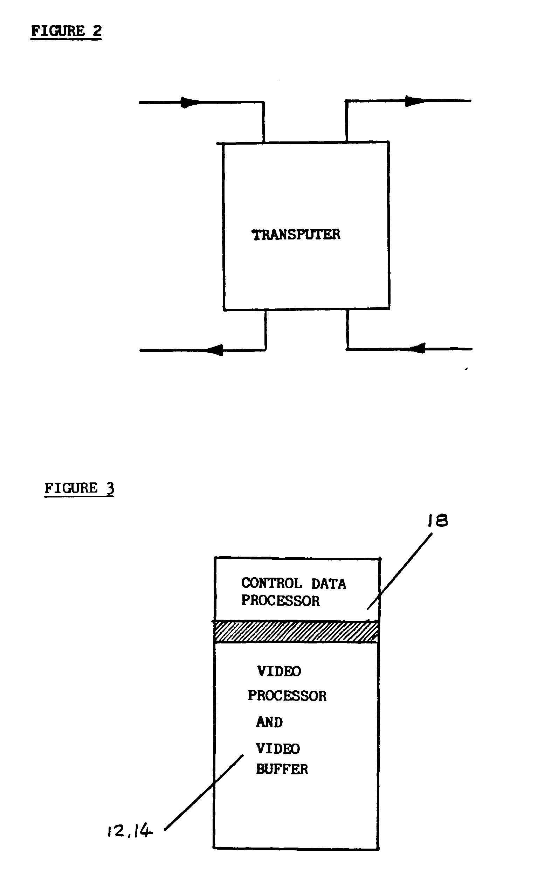

A control bus 50 is provided linking the processing units 10 together. This bus preferably transmits control data and processor run time code serially and may comprise a four-wire transputer bus as is illustrated in Figure 2. This replaces "exotic architectures" with a simple ladder arrangement in which information is merely passed in a chain from one processing unit 10 to the next. In this arrangement, the control data processors 18 can operate as conventional link devices and the processors 14 and RAMs 16 need not be clocked and can operate asynchronously as transputers. Indeed, a processor 14 and RAM 16 can be formed from a conventional transputer.

To allow overall control of the system and to give greater flexibility, a host computer 60 is connected to the control bus 50. In the illustrated embodiment, the host computer 60 is also provided with a tram buffer 62 to convert the input/output protocol of the host computer 60 into the asynchronous transputer link protocol required for the bus 50. The host computer is also provided with programming tools 64 to enable re-arrangement of the system.

In operation, an operator may use the programming tools 64 to cause the host computer 60 to download programming information to each of the processing units 10. The programming information may cause each of the processing units to perform the same video processing function, but on different portions of the input video signal or may cause the processing units 10 to carry out different processing functions which may be carried out in a sequence.

As illustrated in Figure 1, the processing units 10 are connected by a common input/output bus. This bus allows transfer of video data between individual processing units 10 as well as between a processing unit 10 and the VTR 30 or hard disc 40. Thus, as indicated above, not only can the processing unit operate in a multiplexed fashion, performing the same or different processes on the same or different portions of the video signal simultaneously, but also, one processing unit may carry out one processing function before passing its output processing data to another processing unit for further processing. This gives the operator total flexibility in allowing the various processing units to be configured as required.

Figure 3 illustrates an alternative processing unit comprising a custom processor. The custom processor is implemented in hardware and can therefore operate at the higher data rate. Therefore, although each control data processor 18 still operates at the lower controller data rate to enable communication with the host computer 60 or the control data processors 18 of the other processing units 10, the actual video processors 14 are combined with the video buffers 12 and operate at the input video data rate.

Although many different particular configurations could be produced, a typical configuration would use 16 processing units at 100+MIPS, giving a total processing power of 1.6 GIPS. However, the system could be upgraded to, for instance, 256 processing units, giving a further 16 fold improvement in performance. Similarly, the video bus illustrated in Figure 1 is a single wide bus, for instance operating at 54Mbps and 32 bits wide. However, other rates and widths are also possible and, rather than using a bus which supplies the same information to each video buffer, it is possible to use a digital video switching matrix to selectively supply parts of the video signal to the various video buffers.

The apparatus has the ability to achieve tasks at a much greater speed than so far available using conventional computer hardware and may achieve tasks in real time in the case of some operations previously only possible in less than real time. The system may be used in many applications, including use in: switching (including 2D effects such as wipe, mix, shrink, expand and chroma key); character generation and titling; compression/decompression; 3D effects; image creation, such as logos; sequence creation for cartoons; visual based linear and non-linear editing; standards conversion; morphing; rendering/shading; colourising; image restoration by filtering, noise reduction, etc; PAL/NTSC encoding/decoding and audio processing.

## Claims

1. An apparatus for producing an output stream of data in real time comprising:
an output section (20) operable at the data rate of the output data stream;
a parallel processing section comprising a plurality of concurrently operable processing means (10) for processing in parallel respective selected subsets of data so as to make processed data available in time for combining to form said output data stream; and
means (12) for interfacing the output section (12) with the parallel processing section (10), the means comprising a plurality of data buffers (12), each data buffer being for buffering data between the output section (20) and a respective one of the processing means (10) and being operable to output data to the data stream at the data rate of said stream; wherein:
the output section (20) is arranged to combine the outputs of the buffers (12) to form said real time output data stream.

2. An apparatus according to claim 1 having an input section (20) for receiving a real time input data stream and means (12) for interfacing the input section with the parallel processing section (10), the means (12) comprising a plurality of data buffers (12), each respective data buffer (12) being for buffering data between the input and a respective one of the processing means (10) and wherein the processing means (10) are operative to allocate processing of portions of data of the input data stream to respective ones of the processing means (10) so that processing thereof can take place in parallel whereby the throughput of processed data can keep up with the input data stream.

3. Apparatus according to claim 2 wherein the input data stream is clocked.

4. An apparatus according to claims 2 or 3, wherein data is processed by individual ones of the processing means (10) asynchronously with respect to said input data stream.

5. An apparatus according to claim 2, 3 or 4 wherein the input section (20) and output section (20) comprise a shared data bus (20).

6. An apparatus according to any one of the preceding claims wherein individual ones of the processing means (10) are only capable of producing processed data at a data rate less than that of said output and/or input data stream.

7. An apparatus according to any one of the preceding claims wherein individual ones of the processing means (10) comprise a custom processor for processing data at the data rate of said output and/or input data stream.

8. Apparatus according to any one of the preceding claims wherein said parallel processing section comprises a plurality of controllers (18), each controller (18) being operable to control a respective processing means (10) and individual ones of the controllers (18) being only capable of handling data at a data rate less than that of said output and/or input data stream.

9. An apparatus according to claim 8 further comprising a host controller (60) and a control bus (50) connected to the host controller (60) and the plurality of controllers (18), whereby the host controller (60) is arranged to coordinate control of the processing means (10) having respective controllers (18).

10. An apparatus according to claim 9 wherein at least one of said plurality of controllers (18) is programmable and the host controller (60) is arranged to send programming data for individually programming said at least one of said plurality of controllers (18).

11. An apparatus according to claim 9 or 10 wherein the processing means (10) and controllers (18) are transputers.

12. An apparatus according to claim 11 wherein the control bus (50) is a four-wire transputer bus.

13. An apparatus for producing an output stream of video and/or audio data of an industry standard format and rate in real time, the apparatus comprising an apparatus according to any preceding claim wherein the data buffers (12) are operable to output data with the industry standard format and rate.
